# EUROPEAN PATENT APPLICATION

(11) **EP 4 819 578 A1**
(43) Date of publication of application: **07.10.2026**
(21) Application number: 24902292.2
(22) Date of filing: 26.09.2024
(51) Int. Cl.: H04L 61/4511

(54) **DOMAIN NAME RESOLUTION METHOD BASED ON CLOUD COMPUTING TECHNOLOGY, AND CLOUD MANAGEMENT PLATFORM**

(30) Priority: 11.12.2023 CN 202311694790; 30.03.2024 CN 202410390913
(71) Applicant: Huawei Cloud Computing Technologies Co., Ltd., Gui'an New District, Guizhou 550025 (CN)
(72) Inventor: TANG, Linhua, Guiyang, Guizhou 550025 (CN); GUO, Chenxuan, Guiyang, Guizhou 550025 (CN); HE, Yuheng, Guiyang, Guizhou 550025 (CN)
(74) Representative: Gill Jennings & Every LLP
(86) International application number: PCT/CN2024/121408
(87) International publication number: WO 2025/123866

(57) **Abstract**

This application discloses a cloud computing technology-based domain name resolution method and a cloud management platform, relating to the field of cloud computing technologies. The method is applied to the cloud management platform. The method includes: grouping a plurality of DNS servers to obtain a plurality of DNS server groups, where the plurality of DNS servers are configured to resolve domain names in a target name zone in a DNS namespace; obtaining a plurality of domain name suffixes, where the plurality of domain name suffixes are suffixes of the domain names in the target name zone; generating a target mapping relationship based on the plurality of domain name suffixes and the plurality of DNS server groups; and allocating the plurality of domain name suffixes to a corresponding DNS server group based on the target mapping relationship, so that a DNS server in the corresponding DNS server group resolves a domain name resolution request when receiving the domain name resolution request. In this application, high availability of a domain name resolution service is ensured by flexibly grouping the DNS servers and scheduling the DNS servers in groups for domain name resolution.

## Description

This application claims priorities to Chinese Patent Application No. 202311694790.3, filed on December 11, 2023 and entitled "LOAD BALANCING-BASED DOMAIN NAME CONFIGURATION METHOD AND APPARATUS", and to Chinese Patent Application No. 202410390913.2, filed on March 30, 2024 and entitled "CLOUD COMPUTING TECHNOLOGY-BASED DOMAIN NAME RESOLUTION METHOD AND CLOUD MANAGEMENT PLATFORM", both of which are incorporated herein by reference in their entireties.

### TECHNICAL FIELD

This application relates to the field of cloud computing technologies, and in particular, to a cloud computing technology-based domain name resolution method and a cloud management platform.

### BACKGROUND

Domain name resolution is a process of resolving a domain name into an internet protocol (internet protocol, IP) address. The resolution is completed by a domain name system (domain name system, DNS) server. When a client initiates access to a domain name, the client first initiates a domain name query request to a local DNS server. If the local DNS server stores an IP address corresponding to the domain name, the IP address is returned to the client, and the domain name resolution process ends. If the local DNS server does not store the IP address corresponding to the domain name, the local DNS server performs a recursive query on behalf of the client from a root name server to a top-level domain name server and then to an authoritative name server, and finally informs the client of the obtained IP address. It can be learned from the foregoing domain name resolution process that the authoritative name server plays a core role in the domain name resolution process, and is responsible for performing resolution to obtain the IP address corresponding to the domain name.

In a related technology, to ensure high availability of a domain name resolution service, a large quantity of DNS servers are usually deployed. These DNS servers back up each other. The domain name resolution service is externally provided through these DNS servers. Even a large-scale distributed denial of service (distributed denial of service, DDoS) attack does not cause disruption to the domain name resolution service.

However, deploying the large quantity of DNS servers results in high costs of the domain name resolution service.

### SUMMARY

This application provides a cloud computing technology-based domain name resolution method and a cloud management platform, which can ensure high availability of a domain name resolution service by grouping DNS servers when DNS server resources are limited. The technical solutions are as follows:
According to a first aspect, a cloud computing technology-based domain name resolution method is provided. The method is applied to a cloud management platform and includes: grouping a plurality of DNS servers to obtain a plurality of DNS server groups, where each DNS server group includes at least one DNS server, any two DNS server groups differ from each other by at least one DNS server, and the plurality of DNS servers are configured to resolve domain names in a target name zone in a DNS namespace; obtaining a plurality of domain name suffixes, where the plurality of domain name suffixes are suffixes of the domain names in the target name zone; generating a target mapping relationship based on the plurality of domain name suffixes and the plurality of DNS server groups, where the target mapping relationship indicates a domain name suffix corresponding to each DNS server group among the plurality of DNS server groups; and allocating the plurality of domain name suffixes to a corresponding DNS server group based on the target mapping relationship, so that a DNS server in the corresponding DNS server group resolves a domain name resolution request when receiving the domain name resolution request.

It can be learned that for a limited quantity of DNS servers, the cloud management platform performs proper grouping and generates the target mapping relationship, so that when the plurality of DNS servers externally provide a domain name resolution service, the DNS servers can be scheduled in groups for domain name resolution based on the target mapping relationship. This not only allows for fine-grained management of the domain name resolution service, but also reduces a blast radius of the domain name resolution service and improves availability of the domain name resolution service.

Optionally, grouping the plurality of DNS servers to obtain the plurality of DNS server groups includes: obtaining a total quantity of the plurality of DNS servers and a server group size, where the server group size indicates a quantity of DNS servers to be grouped into a same group; and grouping the plurality of DNS servers through permutation and combination based on the total quantity of the plurality of DNS servers and the server group size, to obtain the plurality of DNS server groups.

The limited quantity of the plurality of DNS servers are grouped through permutation and combination, so that a large quantity of server groups can be obtained. A larger quantity of DNS server groups indicates a smaller blast radius when the limited quantity of the plurality of DNS servers externally provide the domain name resolution service.

Optionally, the cloud management platform is configured to manage a cloud infrastructure. The cloud infrastructure includes the plurality of DNS servers.

Optionally, if the plurality of DNS servers are located in a plurality of availability zones AZs in the cloud infrastructure, and the server group size is greater than or equal to a total quantity of the plurality of AZs, then each DNS server group includes at least one DNS server in each AZ.

If the plurality of DNS servers are distributed in the plurality of AZs, each DNS server group includes a DNS server in each AZ when the DNS server groups are obtained through grouping. In this way, when each DNS server group resolves a domain name with a corresponding domain name suffix, a corresponding DNS server may be flexibly selected based on a communication distance, to improve domain name resolution efficiency.

Optionally, if the plurality of DNS servers are located in a plurality of regions (regions) in the cloud infrastructure, then the plurality of regions correspond to a same virtual access address, and DNS server groups in the plurality of regions correspond to a same domain name suffix.

It can be learned that when a domain name in a target DNS zone is resolved, the DNS servers in the plurality of regions back up each other. When a domain name resolution request for any domain name that belongs to the DNS zone is forwarded to any region in the plurality of regions, a DNS server group in the region can resolve the domain name, to ensure high availability of a domain name resolution service in the target DNS zone.

Optionally, if the domain name resolution request carries a target domain name, and the target domain name belongs to the target name zone, then the corresponding DNS server group is determined from the plurality of DNS server groups based on the target domain name and the target mapping relationship.

When the plurality of DNS servers externally provide domain name resolution, the cloud management platform resolves the domain name resolution request by scheduling a DNS server group, to implement fine-grained management of domain name resolution in the DNS zone.

Optionally, the corresponding DNS server is a DNS server group corresponding to a target domain name suffix. The target domain name suffix is a domain name suffix that is determined, using a longest suffix matching algorithm, from domain name suffixes corresponding to the plurality of DNS server groups and that matches the target domain name.

It can be learned that the target domain name suffix with the highest similarity to the target domain name (or the largest quantity of same parts as the target domain name) can be determined using the longest suffix matching algorithm, to improve matching accuracy of the domain name suffix, so that the target DNS server group corresponding to the target domain name suffix that matches the target domain name can effectively resolve the target domain name.

Optionally, the DNS server that resolves the domain name resolution request is a DNS server in the corresponding DNS server group.

Optionally, if DNS servers included in the corresponding DNS server group are located in at least one availability zone AZ, the DNS server that resolves the domain name resolution request is a DNS server in a first AZ in the corresponding DNS server group. The first AZ is an AZ in which an initiator of the domain name resolution request is located.

Optionally, if the DNS server in the first AZ cannot resolve the target domain name, the DNS server that resolves the domain name resolution request is a DNS server in another AZ other than the first AZ in the corresponding DNS server group.

It can be learned that for the target domain name carried in the domain name resolution request, when the target DNS server group corresponding to the target domain name includes DNS servers in a plurality of AZs, a DNS server in the same AZ as the initiator of the domain name resolution request is preferentially selected from the target DNS server group to resolve the target domain name, to improve domain name resolution efficiency. If the DNS server in the same AZ as the initiator of the domain name resolution request in the target DNS server group cannot resolve the target domain name, the domain name may be further resolved by a DNS server in another AZ in the target DNS server group. In this way, when a DNS server group includes DNS servers in a plurality of AZs, high availability of a domain name resolution service is further ensured when a domain name with a specific domain name suffix is resolved.

According to a second aspect, a cloud management platform is provided. The cloud management platform has a function of implementing behavior in the cloud computing technology-based domain name resolution method according to the first aspect. The cloud management platform includes at least one module. The at least one module is configured to implement steps of the cloud computing technology-based domain name resolution method according to the first aspect.

According to a third aspect, a compute device cluster is provided. The compute device cluster includes at least one compute device. Each compute device includes a processor and a memory. The processor of the at least one compute device is configured to execute instructions stored in the memory of the at least one compute device, to enable the compute device cluster to perform steps of the cloud computing technology-based domain name resolution method according to the first aspect.

Optionally, each compute device may further include a communication bus. The communication bus is configured to establish a connection between the processor and the memory of each compute device.

According to a fourth aspect, a computer-readable storage medium is provided. The storage medium includes computer program instructions. When the computer program instructions are executed by a compute device cluster, the compute device cluster is enabled to perform steps of the cloud computing technology-based domain name resolution method according to the first aspect.

According to a fifth aspect, a computer program product including instructions is provided. When the instructions are run by a compute device cluster, the compute device cluster is enabled to perform steps of the cloud computing technology-based domain name resolution method according to the first aspect.

Technical effects obtained in the second aspect to the fifth aspect are similar to technical effects obtained by the corresponding technical means in the first aspect. Details are not described herein again.

### BRIEF DESCRIPTION OF DRAWINGS

FIG. 1 is a diagram of an implementation environment of a cloud computing technology-based domain name resolution method according to an embodiment of this application;
FIG. 2 is a schematic flowchart of a cloud computing technology-based domain name resolution method according to an embodiment of this application;
FIG. 3 is a schematic flowchart of performing domain name resolution based on a target mapping relationship according to an embodiment of this application;
FIG. 4 is a diagram of selecting a DNS server from a target DNS server group for domain name resolution according to an embodiment of this application;
FIG. 5 is another diagram of selecting a DNS server from a target DNS server group for domain name resolution according to an embodiment of this application;
FIG. 6 is a diagram of scheduling DNS server groups in a plurality of regions for domain name resolution according to an embodiment of this application;
FIG. 7 is a diagram of implementation logic of performing a domain name resolution method by a cloud management platform according to an embodiment of this application;
FIG. 8 is a diagram of a structure of a cloud management platform according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram of a network connection relationship of a compute device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, before a cloud computing technology-based domain name resolution method provided in embodiments of this application is described in detail, terms, an application scenario, and an implementation environment in embodiments of this application are first described.

First, the terms in embodiments of this application are described.

### 1. Basic service

It is a service that provides a basic function for another service, and includes but is not limited to a computing service, a storage service, a load balancing service, a domain name system (domain name system, DNS) service, or the like.

### 2. DNS service

It is also referred to as a domain name resolution service, which is a process of resolving a domain name into an internet protocol (internet protocol, IP) address. A domain name resolution process is as follows: When a client initiates access to a domain name, the client first initiates a domain name query request to a local DNS server. If the local DNS server stores an IP address corresponding to the domain name, the IP address is returned to the client, and the domain name resolution process ends. If the local DNS server does not store the IP address corresponding to the domain name, the local DNS server performs a recursive query on behalf of the client from a root name server to a top-level domain name server and then to an authoritative name server, and finally returns an obtained IP address of the domain name to the client.

### 3. DNS zone (zone)

The DNS zone is a continuous tree in a DNS domain name space. The domain name space is divided into a plurality of small management units as needed. One DNS zone is a management unit that includes a single zone in a DNS namespace or a plurality of adjacent subdomains with a hierarchical relationship.

It should be noted that a DNS server manages the namespace by zone rather than by domain. A name of a zone managed by a DNS server is in a one-to-one correspondence with a name of a domain of a DNS namespace managed by the DNS server. One DNS server may manage one or more DNS zones. One DNS zone may be managed by a plurality of DNS servers.

### 4. Authoritative name server

It is a DNS server that can make an authoritative response to a domain name query/resolution request of a DNS zone managed by the DNS server, namely, a DNS server that can complete IP address mapping.

### 5. Recursive name server

It is an intermediate proxy server between a DNS client and an authoritative name server.

### 6. Layer 4 load balancer

It is a software apparatus that forwards a packet to different backend servers based on packet information of a transmission control protocol (transmission control protocol, TCP) or a user datagram protocol (user datagram protocol, UDP).

### 7. Blast radius (blast radius)

In a domain name resolution service, the blast radius is an impact scope of a DNS server fault on users.

### 8. Fault isolation

Fault isolation is to control impact of a fault within a limited scope.

Next, the application scenario in embodiments of this application is briefly described.

Domain name resolution is a process of resolving a domain name into an IP address. The resolution is completed by a DNS server. An authoritative name server plays a core role in a domain name resolution process, and is responsible for performing resolution to obtain an IP address corresponding to a domain name. In a related technology, to ensure high availability of a domain name resolution service, a large quantity of DNS servers need to be deployed as authoritative name servers. These DNS servers back up each other. The domain name resolution service is externally provided through these DNS servers. In this way, even a large-scale distributed denial of service (distributed denial of service, DDoS) attack does not cause disruption to the domain name resolution service because a quantity of DNS servers is large enough. Although this solution is simple to implement, the large quantity of DNS servers need to be deployed, resulting in high costs of the domain name resolution service.

In view of this, embodiments of this application provide a cloud computing technology-based domain name resolution method. For domain names in a target DNS zone, a plurality of DNS servers are properly grouped based on limited DNS server resources, to obtain a plurality of DNS server groups. Each DNS server group is configured to provide a resolution service for a part of the domain names in the target DNS zone. In other words, in embodiments of this application, for a limited quantity of DNS servers, a domain name management solution with a finer granularity is provided for domain names in a single DNS zone or a small quantity of DNS zones, to ensure high availability of a domain name resolution service and minimize a blast radius of the domain name resolution service.

The cloud computing technology-based domain name resolution method provided in embodiments of this application is applied to a cloud management platform. The cloud management platform may be a server cluster, a distributed system, or the like including a plurality of physical servers, or may be a cloud server that provides a basic cloud computing service like a cloud service, a cloud database, cloud computing, a cloud function, cloud storage, a network service, cloud communication, a middleware service, a domain name service, a security service, a content delivery network (content delivery network, CDN), or a big data and artificial intelligence platform, or may be a cloud computing service center.

In embodiments of this application, the cloud management platform may provide and display a domain name registration interface to a tenant. The domain name registration interface is used by the tenant to register a domain name, submit a domain name that needs to be managed, or submit a domain name resolution request for performing resolution to obtain an IP address.

In embodiments of this application, the cloud management platform may further provide and display a domain name management service interface to a user of the cloud management platform. The configuration interface is used by the user to input domain name information of a name zone, and DNS server information such as a total quantity of a plurality of DNS servers, a server group size, and deployment locations of the DNS servers. In this way, the cloud management platform can perform the cloud computing technology-based domain name resolution method provided in embodiments of this application to determine a plurality of domain name suffixes based on the domain name information and group the plurality of DNS servers, and then generate a target mapping relationship between the domain name suffixes and DNS server groups based on the plurality of domain name suffixes and the plurality of DNS server groups.

The user herein may be an administrator of the cloud management platform, or may be a tenant of the cloud management platform.

In some embodiments, when the user is the tenant of the cloud management platform, the cloud management platform may provide a domain name management solution for the tenant based on the domain name information and the DNS server information that are provided by the tenant. That is, the cloud management platform performs the cloud computing technology-based domain name resolution method provided in embodiments of this application to generate the target mapping relationship between the domain name suffixes and the DNS server groups for the tenant.

In this way, after obtaining the target mapping relationship from the cloud management platform, the tenant can perform, based on the target mapping relationship, fine-grained management on a domain name resolution service provided by the plurality of DNS servers of the tenant.

In some embodiments, when the user is the administrator of the cloud management platform, the cloud management platform is further configured to manage a cloud infrastructure. The cloud infrastructure includes the plurality of DNS servers. In this case, the cloud management platform performs the cloud computing technology-based domain name resolution method provided in embodiments of this application to determine the target mapping relationship between the domain name suffixes and the DNS server groups based on the domain name information and the DNS server information that are input by the administrator.

Optionally, when the cloud management platform generates the target mapping relationship, the administrator may configure the target mapping relationship for a management device of the cloud infrastructure, so that the management device of the cloud infrastructure schedules, based on the target mapping relationship, the plurality of DNS servers in the cloud infrastructure for domain name resolution.

In this case, the cloud management platform is configured only to generate the target mapping relationship, and the management device of the cloud infrastructure performs, based on the target mapping relationship, fine-grained management on a domain name resolution service provided by the plurality of DNS servers in the cloud infrastructure.

Optionally, when the cloud management platform generates the target mapping relationship, if the cloud management platform directly manages the cloud infrastructure, the cloud management platform may further store the target mapping relationship; and when receiving a domain name resolution request, schedule, based on the target mapping relationship, a DNS server in a corresponding DNS server group to resolve the domain name.

In this case, the cloud management platform is not only configured to generate the target mapping relationship, but also to directly schedule, based on the target mapping relationship, the DNS servers in the cloud infrastructure managed by the cloud management platform for domain name resolution.

It can be learned that in embodiments of this application, the cloud management platform may externally provide a domain name management service, to provide a DNS server grouping solution and a domain name suffix allocation solution for the user, that is, generate the target mapping relationship between the domain name suffixes and the DNS server groups for the user based on the domain name information and the DNS server information that are managed by the user. The cloud management platform may further externally provide a domain name resolution service, to generate the target mapping relationship between the domain name suffixes and the DNS server groups based on a situation of the plurality of DNS servers in the cloud infrastructure managed by the cloud management platform and domain name information of a target name zone, and schedule, based on the target mapping relationship, the DNS server in the corresponding DNS server group to resolve the domain name resolution request. This is not limited in embodiments of this application.

Finally, the implementation environment in embodiments of this application is described by using an example in which a cloud management platform manages a cloud infrastructure and the cloud infrastructure includes a plurality of DNS servers.

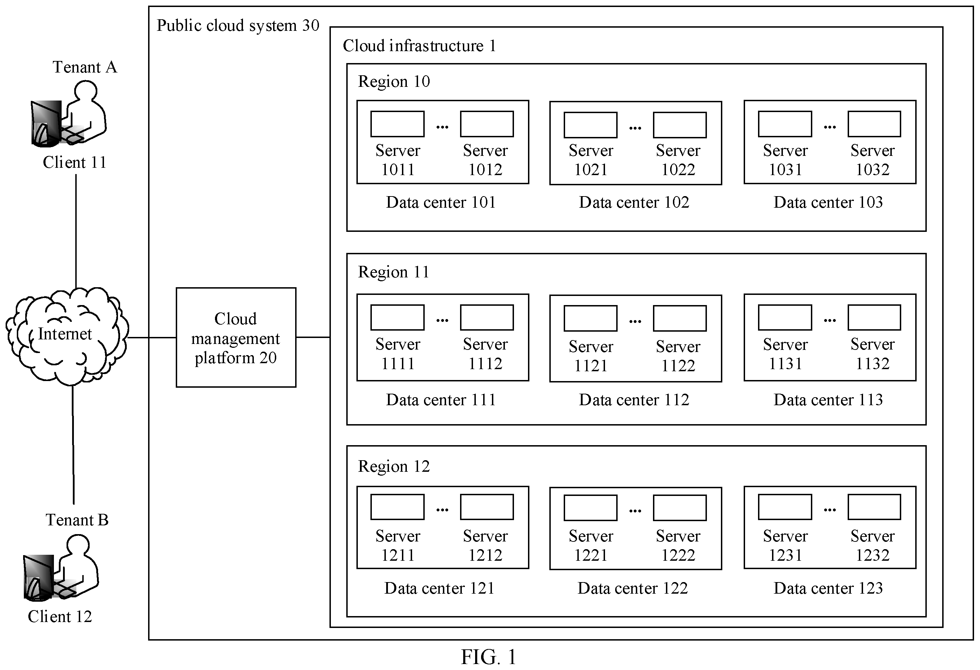

FIG. 1 is a diagram of an implementation environment according to an embodiment of this application. The implementation environment includes a tenant side and a service side (namely, a cloud platform). On the service side, a cloud management platform 20 is configured to manage a cloud infrastructure 1. The cloud infrastructure 1 includes a plurality of regions (regions), for example, includes a region 10, a region 11, and a region 12. Each region includes a plurality of data centers, for example, includes a data center 101, a data center 102, and a data center 103. Each cloud data center includes a plurality of DNS servers that provide a domain name resolution service, for example, includes a server 1011 and a server 1012. On the tenant side, a tenant A and a tenant B connect to the internet and log in to the cloud management platform 20 through a client 11 and a client 12, respectively.

The client 11 and the client 12 each may be, for example, a terminal device such as a mobile phone having an internet access function, a personal computer, a personal digital assistant, or a thin client.

Optionally, the cloud management platform 20 provides a configuration interface. The tenant A and the tenant B each input configuration information of a cloud instance on the configuration interface. The cloud management platform 20 configures and manages, based on the configuration information, a server on which the cloud instance is located, for example, may create or delete the cloud instance, and may perform full lifecycle management on the cloud instance based on the configuration information.

Optionally, each region includes a plurality of availability zones (availability zones, AZs), which are not shown in FIG. 1. One AZ is a set of one or more data centers. One AZ has independent water and electricity resources. Within an AZ, resources such as computing, networking, and storage are logically divided into a plurality of clusters. A plurality of AZs in one region may be connected through a high-speed optical fiber to meet a user's requirement for building a cross-AZ high-availability system.

In an example, the region 10 may include AZ1 and AZ2. AZ1 is communicatively connected to AZ2. AZ1 includes the data center 101 and the data center 102. AZ2 includes the data center 103. This is not limited in embodiments of this application.

It should be understood that a region and an availability zone are used to describe a location of a data center, and a tenant may create a resource in a specific region and availability zone. In addition, in embodiments of this application, the region and the availability zone are used to describe a location of a DNS server, to determine whether the domain name resolution service provided by the plurality of DNS servers is deployed in a single data center, a single AZ, across a plurality of AZs, or across regions.

It should be noted that FIG. 1 merely shows an example in which there are two tenants and two clients and the cloud infrastructure 1 include three regions, and does not constitute a limitation on quantities and types of clients on the tenant side, cloud infrastructures, regions, AZs, data centers, and the like in the implementation environment.

In embodiments of this application, the cloud management platform 20 can provide and display a domain name registration interface to the tenant side. The domain name registration interface is used by a tenant to register a domain name, submit a domain name that needs to be managed, or submit a domain name resolution request for performing resolution to obtain an IP address.

In embodiments of this application, the cloud management platform 20 further provides and displays a configuration interface to an administrator of the cloud management platform. The configuration interface is used by the administrator to input information such as a total quantity of the plurality of DNS servers in the cloud infrastructure managed by the cloud management platform, a server group size, and deployment locations of the DNS servers. In this way, the cloud management platform can perform the cloud computing technology-based domain name resolution method provided in embodiments of this application to determine a target mapping relationship between domain name suffixes of a target name zone and DNS server groups.

Optionally, when the target mapping relationship is generated, the cloud management platform may further call a corresponding DNS server group based on the target mapping relationship to resolve a domain name in the target name zone.

Optionally, when the target mapping relationship is generated, the cloud management platform may alternatively send the target mapping relationship to a target device, so that the target device can call a corresponding DNS server group based on the target mapping relationship to resolve a domain name in the target name zone.

In other words, an execution body for scheduling and managing the plurality of DNS servers based on the target mapping relationship to resolve domain names in the target name zone is not limited in embodiments of this application.

In an example, when the cloud management platform serves as the execution body for scheduling and managing the plurality of DNS servers to resolve the domain names in the target name zone, the cloud management platform may further include a management apparatus and a load balancing apparatus. When the cloud computing technology-based domain name resolution method provided in embodiments of this application is implemented, the management apparatus is configured to: determine a plurality of domain name suffixes based on domain names in a target DNS zone, and group the plurality of DNS servers to obtain a plurality of DNS server groups; and then allocate the plurality of domain name suffixes to the plurality of DNS server groups, so that each DNS server group corresponds to at least one domain name suffix, to obtain a target mapping relationship between the domain name suffixes and the DNS server groups, and send the target mapping relationship to the load balancing apparatus corresponding to the data center. The load balancing apparatus is configured to receive a domain name resolution request, extract a target domain name from the request, determine, based on the target domain name and the target mapping relationship, a target DNS server group corresponding to the target domain name, and call a DNS server in the target DNS server group to resolve the target domain name.

Optionally, the load balancing apparatus may work at a transport layer (namely, a fourth network layer). The load balancing apparatus may also be referred to as a layer 4 load balancing apparatus. It forwards a domain name resolution request sent through a TCP or UDP packet, to forward, based on a target domain name carried in the domain name resolution request, the packet to a corresponding target DNS server group at a backend.

It should be understood that when the cloud management platform performs the cloud computing technology-based domain name resolution method provided in embodiments of this application, the foregoing management apparatus and load balancing apparatus are merely used as an example for description, and more or fewer apparatuses may alternatively be included to implement the domain name resolution method in combination. A specific implementation of a corresponding apparatus in the cloud management platform is not limited in embodiments of this application.

Persons skilled in the art should understand that the foregoing cloud platform, cloud management platform, and cloud infrastructure are merely examples. If another existing or future cloud platform, cloud management platform, and cloud infrastructure are applicable to embodiments of this application, they should also be included within the protection scope of embodiments of this application, and are included herein by reference.

It should be noted that the application scenario and the implementation environment that are described in embodiments of this application are intended to describe the technical solutions in embodiments of this application more clearly, and do not constitute a limitation on the technical solutions provided in embodiments of this application. Persons of ordinary skill in the art may be aware that as a technology evolves and a new application scenario emerges, the technical solutions provided in embodiments of this application are also applicable to a similar technical problem.

The following describes the cloud computing technology-based domain name resolution method provided in embodiments of this application.

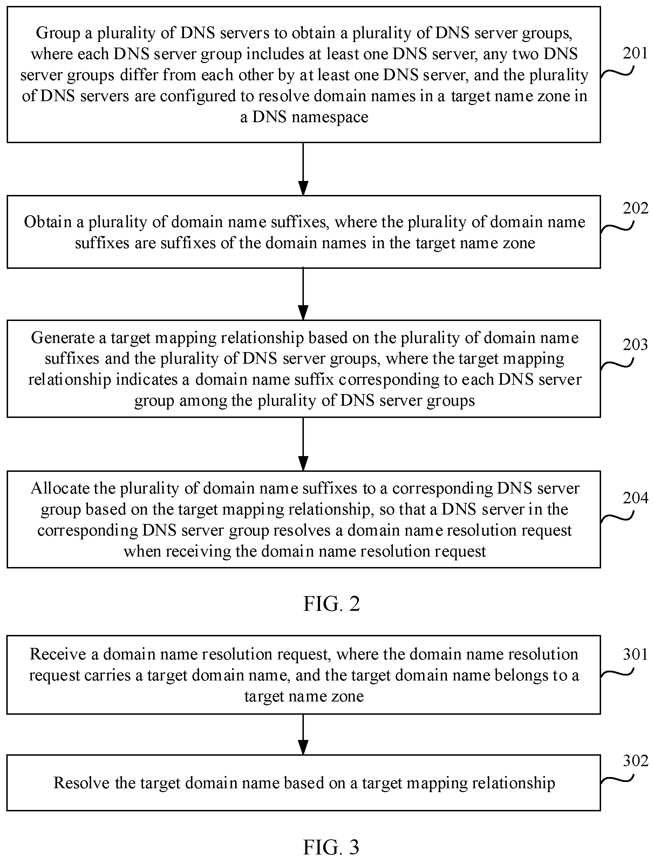

FIG. 2 is a flowchart of a cloud computing technology-based domain name resolution method according to an embodiment of this application. The method may be applied to a cloud management platform. The method includes the following steps.

**Step 201**: Group a plurality of DNS servers to obtain a plurality of DNS server groups. Each DNS server group includes at least one DNS server. Any two DNS server groups differ from each other by at least one DNS server. The plurality of DNS servers are configured to resolve domain names in a target name zone in a DNS namespace.

There is no direct quantity relationship between the plurality of DNS servers and the plurality of DNS server groups. A quantity of the DNS server groups may be less than, equal to, or greater than a total quantity of the plurality of DNS servers. When the quantity of the DNS servers is limited, in embodiments of this application, as many DNS server groups as possible are obtained through proper grouping, to ensure that the limited quantity of the plurality of DNS servers can provide a high-availability domain name resolution service for domain names in a target DNS zone.

In some embodiments, when any two DNS server groups differ from each other by at least one DNS server, DNS servers included in the DNS server groups are not completely the same. In other words, DNS servers included in different DNS server groups may be completely different or partially different.

In an example, if the plurality of DNS servers include a DNS server a, a DNS server b, and a DNS server c, the following plurality of DNS server groups may be obtained after the three DNS servers are grouped: a first DNS server group (including the DNS server a), a second DNS server group (including the DNS server b), a third DNS server group (including the DNS server c), a fourth DNS server group (including the DNS server a and the DNS server b), a fifth DNS server group (including the DNS server b and the DNS server c), a sixth DNS server group (including the DNS server a and the DNS server c), and a seventh DNS server group (including the DNS server a, the DNS server b, and the DNS server c).

It can be learned that when the plurality of DNS servers are grouped without limiting a quantity of groups, a quantity of DNS servers in a DNS server group, and the like, a maximum quantity of DNS server groups can be obtained through flexible grouping. When the quantity of the DNS server groups is maximized, a blast radius is minimized because the blast radius is 1 divided by the quantity of the DNS server groups. It can be learned that for a limited quantity of DNS servers, proper grouping not only enables domain name resolution through different DNS server groups to allow for fine-grained management of the domain name resolution service, but also reduces a blast radius of the domain name resolution service and improves availability of the domain name resolution service.

In some embodiments, because different DNS server groups are used to resolve domain names with different domain name suffixes, when a DNS server group is faulty and cannot resolve a domain name with a corresponding domain name suffix, another DNS server group needs to be used to resolve the domain name with the domain name suffix, to ensure high availability of the domain name resolution service. Based on this, a backup relationship is established between the plurality of DNS server groups. In other words, different DNS server groups have overlapping DNS servers.

After the plurality of DNS servers are grouped, the DNS servers included in the plurality of DNS server groups are not completely the same. However, DNS servers included in different DNS server groups may be partially the same. In other words, there may be at least one DNS server in common between different DNS server groups.

In this case, the plurality of DNS server groups obtained after step 201 is performed to group the DNS server a, the DNS server b, and the DNS server c in the foregoing example include the fourth DNS server group (including the DNS server a and the DNS server b), the fifth DNS server group (including the DNS server b and the DNS server c), the sixth DNS server group (including the DNS server a and the DNS server c), and the seventh DNS server group (including the DNS server a, the DNS server b, and the DNS server c).

In other words, for the plurality of DNS server groups, when there is one DNS server in common between different DNS servers, a maximum quantity of groups can be ensured, and a backup relationship can be established between the server groups, to improve the availability of the domain name resolution service.

In some embodiments, under the condition that any two DNS server groups differ from each other by at least one DNS server, a server group size may be further limited, so that the plurality of DNS server groups obtained have a same size. In other words, each DNS server group includes a same quantity of DNS servers.

In a possible implementation, an implementation process of step 201 may be as follows: Obtain the total quantity of the plurality of DNS servers and the server group size, where the server group size indicates a quantity of DNS servers to be grouped into a same group; and group the plurality of DNS servers through permutation and combination based on the total quantity of the plurality of DNS servers and the server group size, to obtain the plurality of DNS server groups.

In some embodiments, as shown in FIG. 1, when the cloud management platform is configured to manage a cloud infrastructure and the cloud infrastructure includes a plurality of DNS servers, the cloud management platform may provide a configuration interface. The configuration interface is used by an administrator of the cloud management platform to input the total quantity of the plurality of DNS servers and the server group size on the configuration interface based on a specific situation of the cloud infrastructure.

The server group size may be any positive integer greater than or equal to 1.

It should be understood that after the plurality of DNS servers are grouped through permutation and combination, the plurality of DNS server groups obtained have a same size, and there is at most one DNS server in common between any two DNS server groups in the plurality of DNS server groups.

In an example, if the plurality of DNS servers include a DNS server a, a DNS server b, a DNS server c, and a DNS server d, and the server group size is 2, the following 6 DNS server groups may be obtained after the plurality of DNS servers are grouped through permutation and combination: a first DNS server group (including the DNS server a and the DNS server b), a second DNS server group (including the DNS server a and the DNS server c), a third DNS server group (including the DNS server a and the DNS server d), a fourth DNS server group (including the DNS server b and the DNS server c), a fifth DNS server group (including the DNS server b and the DNS server d), and a sixth DNS server group (including the DNS server c and the DNS server d).

It can be learned that in embodiments of this application, the limited quantity of the plurality of DNS servers are grouped through permutation and combination, so that a large quantity of server groups can be obtained. A larger quantity of DNS server groups indicates a smaller blast radius when the plurality of DNS servers externally provide the domain name resolution service.

In addition, when the domain name in the target name zone is resolved, in embodiments of this application, a DNS server is scheduled based on a target DNS server group to resolve a target domain name. In this way, when a DNS server group is faulty, only a resolution service of a domain name with a domain name suffix corresponding to the DNS server group is affected, and a domain name resolution service of another DNS server group is not affected. Therefore, in the cloud computing technology-based domain name resolution method provided in embodiments of this application, when the plurality of DNS servers externally provide the domain name resolution service, the blast radius of the domain name resolution service is 1 divided by the quantity of the DNS server groups, thereby greatly reducing the blast radius when the domain name resolution service is provided for domain names in a single DNS zone or a small quantity of DNS zones.

As described above, in the cloud infrastructure managed by the cloud management platform, the plurality of DNS servers may be located in one availability zone (availability zone, AZ), or may be located in a plurality of AZs. The following separately describes the two cases.

In a first case, if the plurality of DNS servers are located in one AZ, the plurality of DNS servers may be directly grouped through permutation and combination based on the total quantity of DNS servers and the server group size, to obtain the plurality of DNS server groups, and information about AZs to which DNS servers included in each DNS server group belong is the same.

In an example, it is assumed that the total quantity of DNS servers is N, and the server group size is R. Table 1 below shows cases of the DNS server groups obtained after the plurality of DNS servers are grouped when the plurality of DNS servers are located in one AZ, and blast radiuses corresponding to different grouping cases.

**Table 1**

| Total quantity of DNS servers (N) | R = 2 | R = 3 | R = 4 |
|---|---|---|---|
| 4 | 1/6 | 1/4 | 1 |
| 6 | 1/15 | 1/20 | 1/15 |
| 8 | 1/28 | 1/56 | 1/70 |
| 16 | 1/120 | 1/560 | 1/1820 |
| 32 | 1/496 | 1/4960 | 1/35960 |
| 64 | 1/2016 | 1/41664 | 1/6353766 |

With reference to Table 1 above, the blast radius is calculated as 1/C(N, R). C represents permutation and combination. For example, when the total quantity of DNS servers is 6, if the server group size is 2, every two DNS servers are grouped together, and C(6, 2) = 15 DNS server groups may be obtained through permutation and combination of the 6 DNS servers. In this grouping case, when the 6 DNS servers provide a domain name resolution service for the target DNS zone, the corresponding blast radius is 1/15.

In a second case, in the cloud infrastructure managed by the cloud management platform, if the plurality of DNS servers are located in a plurality of AZs, and the server group size is greater than or equal to a total quantity of the plurality of AZs, then each DNS server group includes at least one DNS server in each AZ.

In an example, it is assumed that the total quantity of DNS servers is N, the server group size is R, and the quantity of AZs is K. Table 2 below shows cases of the DNS server groups obtained after the plurality of DNS servers are grouped when the plurality of DNS servers are located in two AZs, and blast radiuses corresponding to different grouping cases.

**Table 2**

| Total quantity of DNS servers (N)/Quantity of DNS servers in a single AZ | R = 2 and K = 1 | R = 4 and K = 2 |
|---|---|---|
| 8/4 | 1/16 | 1/36 |
| 12/6 | 1/36 | 1/225 |
| 16/8 | 1/64 | 1/784 |
| 32/16 | 1/256 | 1/14400 |
| 64/32 | 1/1024 | 1/246016 |

With reference to Table 2 above, the blast radius is calculated as 1/C(N/2, K)². C represents permutation and combination. K = R/2. For example, when the total quantity of DNS servers is 16, and each AZ includes 8 DNS servers, if the server group size is 4, DNS servers in each DNS server group are selected from the two AZs. In other words, each DNS server group includes DNS servers in the two AZs. In this case, C(16/2, 2)² = 784 DNS server groups may be obtained through permutation and combination of the 16 DNS servers. In this grouping case, when the 16 DNS servers provide a domain name resolution service for the target DNS zone, the corresponding blast radius is 1/784.

In an example, it is also assumed that the total quantity of DNS servers is N, the server group size is R, and the quantity of AZs is K. Table 3 below shows cases of the DNS server groups obtained after the plurality of DNS servers are grouped when the plurality of DNS servers are located in three AZs, and blast radiuses corresponding to different grouping cases.

**Table 3**

| Total quantity of DNS servers (N)/Quantity of DNS servers in a single AZ | R = 2 and K = 1 | R = 4 and K = 2 |
|---|---|---|
| 9/3 | 1/27 | 1/729 |
| 12/4 | 1/64 | 1/216 |
| 15/5 | 1/125 | 1/1000 |
| 24/8 | 1/512 | 1/21952 |
| 30/10 | 1/1000 | 1/91125 |

With reference to Table 3 above, the blast radius is calculated as 1/C(N/2, K)³. C represents permutation and combination. K = R/3. For example, when the total quantity of DNS servers is 15, and each AZ includes 5 DNS servers, if the server group size is 4, DNS servers in each DNS server group are selected from the three AZs. In other words, each DNS server group includes DNS servers in the three AZs. In this case, C(15/3, 2)³ = 1000 DNS server groups may be obtained through permutation and combination of the 15 DNS servers. In this grouping case, when the 15 DNS servers provide a domain name resolution service for the target DNS zone, the corresponding blast radius is 1/1000.

**Step 202**: Obtain a plurality of domain name suffixes. The plurality of domain name suffixes are suffixes of the domain names in the target name zone.

In a possible implementation, an implementation process of step 202 may be as follows: Perform suffix extraction processing on the domain names in the target name zone based on a domain name suffix extraction rule to obtain the plurality of domain name suffixes. The domain name suffix extraction rule indicates to extract the domain name suffixes from the domain names based on a specified domain name level.

It should be noted that the domain name suffix extraction rule may be configured by an administrator. The domain name level may be a top-level domain name, indicating to extract a top-level domain name in each domain name as a suffix. Alternatively, the domain name level may be a second-level domain name, a third-level domain name, or the like, indicating to extract a second-level domain name or a third-level domain name as a suffix. This is not limited in embodiments of this application. In addition, for the domain names in the target name zone, a quantity of extracted domain name suffixes is not limited in embodiments of this application.

**Step 203**: Generate a target mapping relationship based on the plurality of domain name suffixes and the plurality of DNS server groups. The target mapping relationship indicates a domain name suffix corresponding to each DNS server group among the plurality of DNS server groups.

In a possible implementation, an implementation process of step 203 may be as follows: Determine a correspondence between the domain name suffixes and the DNS server groups based on a quantity relationship between the domain name suffixes and the DNS server groups, to obtain the target mapping relationship.

In the target mapping relationship, there may be a one-to-one, many-to-one, or one-to-many correspondence between the domain name suffixes and the DNS server groups. This is not limited in embodiments of this application.

In some embodiments, considering that domain name suffixes may have a dependency relationship, to avoid mutual impact when domain names corresponding to two domain name suffixes are resolved, domain name suffixes that have the dependency relationship need to be allocated to different DNS server groups. In other words, there is no DNS server in common between DNS server groups corresponding to two domain name suffixes that have the dependency relationship. Therefore, no single DNS server stores domain names corresponding to two domain name suffixes that have the dependency relationship.

In an example, for a domain name suffix obs and a domain name suffix ecs, a DNS server group corresponding to the domain name suffix obs is a first DNS server group, a DNS server group corresponding to the domain name suffix ecs is a second DNS server group, and DNS servers included in the first DNS server group and the second DNS server group are completely different.

Based on this, domain name suffixes that have the dependency relationship correspond to completely different DNS server groups. Therefore, when a DNS server in a DNS server group corresponding to a domain name suffix is faulty, a domain name resolution service of a DNS server group corresponding to another domain name suffix that has the dependency relationship with the domain name suffix is not affected. A fault impact scope of a domain name resolution service can be controlled in a single DNS server group to implement fine-grained fault isolation.

It should be noted that when the plurality of domain name suffixes are allocated to the plurality of DNS servers, a DNS server group corresponding to each domain name suffix may be determined in a coordinated manner based on a relationship between the domain name suffixes and/or an overlapping status of the DNS servers in the DNS server groups. This is not limited in embodiments of this application. The foregoing dependency relationship between domain name suffixes is merely an example, and does not constitute a limitation on a specific implementation of step 203.

**Step 204**: Allocate the plurality of domain name suffixes to a corresponding DNS server group based on the target mapping relationship, so that a DNS server in the corresponding DNS server group resolves a domain name resolution request when receiving the domain name resolution request.

After the plurality of domain name suffixes are allocated, each DNS server group may correspond to one domain name suffix, or may correspond to a plurality of domain name suffixes. This is not limited in embodiments of this application.

In some embodiments, if the domain name resolution request carries a target domain name, and the target domain name belongs to the target name zone, then the corresponding DNS server group is determined from the plurality of DNS server groups based on the target domain name and the target mapping relationship.

In a possible implementation, the corresponding DNS server may be a DNS server group corresponding to a target domain name suffix. The target domain name suffix is a domain name suffix that is determined, using a longest suffix matching algorithm, from domain name suffixes corresponding to the plurality of DNS server groups and that matches the target domain name.

In other words, for a DNS server group that resolves the target domain name, a domain name suffix corresponding to the DNS server group has the highest similarity to a suffix of the target domain name.

In some embodiments, the DNS server that resolves the domain name resolution request is a DNS server in the corresponding DNS server group.

In other words, after a DNS server group that receives the domain name resolution request is selected from the plurality of DNS server groups, the domain name resolution request is resolved by one DNS server in the DNS server group, rather than all DNS servers in the DNS server group, to improve resource utilization of DNS servers.

In some embodiments, if DNS servers included in the corresponding DNS server group are located in at least one AZ, the DNS server that resolves the domain name resolution request is a DNS server in a first AZ in the corresponding DNS server group.

The first AZ is an AZ in which an initiator of the domain name resolution request is located.

Optionally, if the DNS server in the first AZ cannot resolve the target domain name, the DNS server that resolves the domain name resolution request is a DNS server in another AZ other than the first AZ in the corresponding DNS server group.

It can be learned that in embodiments of this application, the cloud management platform properly groups the plurality of DNS servers to obtain the maximum quantity of DNS server groups; and determines the plurality of domain name suffixes based on the domain names in the target name zone, generates the target mapping relationship based on the plurality of domain name suffixes and the plurality of DNS server groups, and allocates the plurality of domain name suffixes to the corresponding DNS server group based on the target mapping relationship, so that each DNS server group can resolve a domain name with a corresponding domain name suffix. In other words, for a limited quantity of DNS servers, the cloud management platform performs proper grouping and generates the target mapping relationship, so that when the plurality of DNS servers externally provide a domain name resolution service, the DNS servers can be scheduled in groups for domain name resolution based on the target mapping relationship. This not only allows for fine-grained management of the domain name resolution service, but also reduces a blast radius of the domain name resolution service and improves availability of the domain name resolution service.

Based on the cloud computing technology-based domain name resolution method shown in the foregoing embodiment, in the following example, a cloud management platform manages a cloud infrastructure, and the cloud infrastructure includes a plurality of DNS servers. After the cloud management platform generates a target mapping relationship for the plurality of DNS servers and domain names in a target name zone in a DNS namespace in the manner shown in the foregoing embodiment, the cloud management platform may further schedule, based on the target mapping relationship, a corresponding DNS server group to resolve a corresponding domain name.

The target mapping relationship indicates a domain name suffix corresponding to each DNS server group among a plurality of DNS server groups.

With reference to FIG. 3, when the cloud management platform performs, based on the target mapping relationship, the cloud computing technology-based domain name resolution method provided in embodiments of this application, the following steps may be further included.

**Step 301**: Receive a domain name resolution request. The domain name resolution request carries a target domain name. The target domain name belongs to the target name zone.

It should be noted that after generating the target mapping relationship, the cloud management platform may first store the target mapping relationship, and then perform step 301 when subsequently receiving the domain name resolution request.

After receiving the domain name resolution request sent by a tenant side, the cloud management platform first resolves the domain name request to obtain the target domain name, and if the target domain name belongs to a target DNS zone, performs step 302 based on the target domain name.

**Step 302**: Resolve the target domain name based on the target mapping relationship.

In some embodiments, an implementation process of step 302 may include the following steps (1) and (2).
(1) Determine a target DNS server group corresponding to the target domain name from the plurality of DNS server groups based on the target mapping relationship.

In a possible implementation, an implementation process of step (1) may be as follows: Determine, using a longest suffix matching algorithm, from domain name suffixes corresponding to the plurality of DNS server groups, a target domain name suffix that matches the target domain name; and determine a DNS server group corresponding to the target domain name suffix as the target DNS server group.

It should be noted that the domain name suffix may be a top-level domain name, a second-level domain name, a third-level domain name, or the like of the target domain name. The longest suffix matching algorithm means that when a suffix of the target domain name is the same as a plurality of domain name suffixes in the target mapping relationship, a domain name suffix with the highest domain name level is used as the target domain name suffix.

In an example, if the target domain name is aaa.xxx.yyy.example.com, domain name suffixes in the target mapping relationship include example.com, yyy.example.com, and xxx.yyy.example.com, example.com is a second-level domain name suffix, yyy.example.com is a third-level domain name suffix, and xxx.yyy.example.com is a fourth-level domain name suffix, xxx.yyy.example.com with the highest domain name level is determined using the longest suffix matching algorithm as the target domain name suffix matching the target domain name.

It can be learned that the target domain name suffix with the highest similarity to the target domain name (or the largest quantity of same parts as the target domain name) can be determined using the longest suffix matching algorithm, to improve matching accuracy of the domain name suffix, so that the target DNS server group corresponding to the target domain name suffix that matches the target domain name can effectively resolve the target domain name.

(2) Resolve the target domain name through a DNS server in the target DNS server group.

It should be noted that any DNS server in the target DNS server group can resolve the target domain name. In other words, each DNS server in the target DNS server group stores IP addresses of all domain names with a corresponding domain name suffix.

In a possible implementation, an implementation process of step (2) may be as follows: Select a DNS server from the target DNS server group; and send the target domain name to the selected DNS server, to indicate the selected DNS server to resolve the target domain name.

When the DNS server is selected from the target DNS server group, the DNS server may be selected from the DNS servers randomly, through polling, or in another manner. A selection manner is not limited in embodiments of this application.

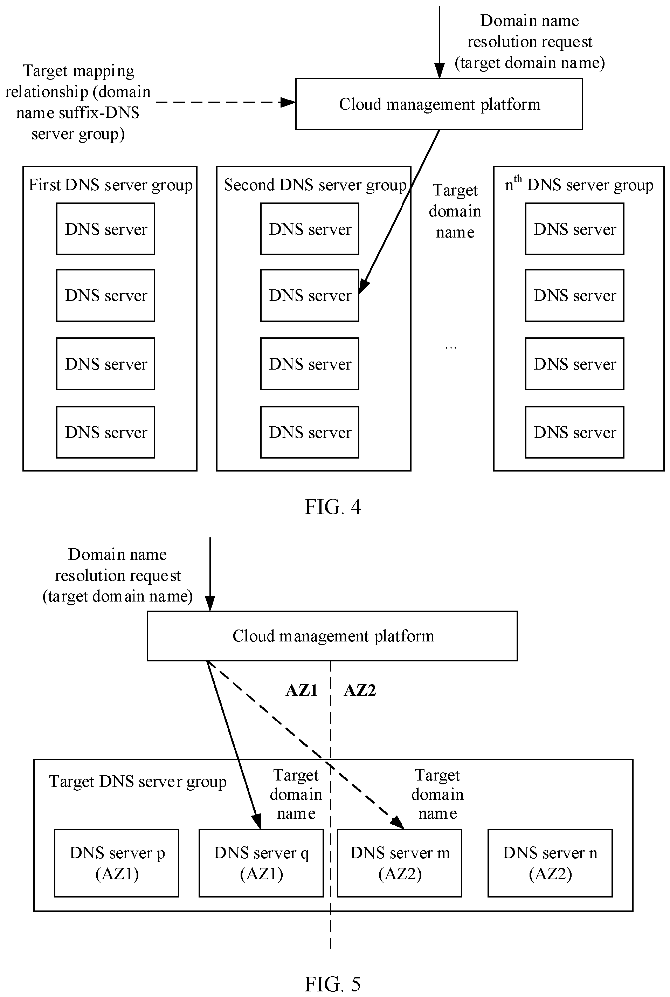

In an example, with reference to FIG. 4, after a second DNS server group is determined as the target DNS server group based on the domain name suffix matching the target domain name, a DNS server is selected from the second DNS server group, and the target domain name is sent to the selected DNS server, to indicate the DNS server to resolve the target domain name.

Optionally, after selecting the DNS server from the target DNS server group, the cloud management platform may alternatively directly forward the domain name resolution request to the selected DNS server, to indicate the DNS server to resolve the target domain name carried in the domain name resolution request. This is not limited in embodiments of this application.

In some embodiments, if the plurality of DNS servers are located in a plurality of AZs, when the DNS server groups are obtained through grouping, each DNS server may include DNS servers in the plurality of AZs. Therefore, DNS servers included in the target DNS server group determined by the cloud management platform are located in at least one AZ. In this case, an implementation of selecting the DNS server from the target DNS server group may be as follows: Determine a first AZ in which an initiator of the domain name resolution request is located; and select, from the target DNS server group, a DNS server in the first AZ. The first AZ is any one of the plurality of AZs.

When the initiator of the domain name resolution request is located in the first AZ, the DNS server in the first AZ is preferentially selected to provide a domain name resolution service. In this way, providing the domain name resolution service through the DNS server in the same AZ leads to a short communication route between the initiator of the domain name resolution request and the DNS server, a low domain name resolution latency, and high domain name resolution efficiency.

Optionally, if the DNS server in the first AZ cannot resolve the target domain name, a DNS server in another AZ other than the first AZ is selected from the target DNS server group to continue resolving the target domain name.

In an example, with reference to FIG. 5, after determining the target DNS server group based on the domain name suffix matching the target domain name, the cloud management platform selects a DNS server p or a DNS server q in AZ1 from the target DNS server group to resolve the target domain name if the initiator of the domain name resolution request is located in AZ1. If the DNS server p or the DNS server q in AZ1 is faulty and cannot resolve the target domain name, a DNS server m or a DNS server n in AZ2 is selected from the target DNS server group to resolve the target domain name.

It should be understood that FIG. 5 merely uses an example in which the DNS server q in AZ1 is selected to resolve the target domain name or the DNS server m in AZ2 is selected to resolve the target domain name for description. During actual application, alternatively, the DNS server p in AZ1 may be selected to resolve the target domain name; and if the DNS server p cannot resolve the target domain name, the DNS server n in AZ2 may be selected to resolve the target domain name. This is not limited in embodiments of this application.

It can be learned that for the target domain name carried in the domain name resolution request, when the target DNS server group corresponding to the target domain name includes DNS servers in a plurality of AZs, a DNS server in the same AZ as the initiator of the domain name resolution request is preferentially selected from the target DNS server group to resolve the target domain name, to improve domain name resolution efficiency. If the DNS server in the same AZ as the initiator of the domain name resolution request in the target DNS server group cannot resolve the target domain name, the domain name may be further resolved by a DNS server in another AZ in the target DNS server group. In this way, when a DNS server group includes DNS servers in a plurality of AZs, high availability of a domain name resolution service is further ensured when a domain name with a specific domain name suffix is resolved.

In some embodiments, if the plurality of DNS servers are located in a plurality of regions, the plurality of regions correspond to a same virtual access address, and DNS server groups in the plurality of regions correspond to a same domain name suffix.

Because virtual access addresses for all regions are the same, in a domain name resolution process, the cloud management platform may select one region from the plurality of regions based on the virtual access address, and forward the domain name resolution request that carries the target domain name to the target DNS server group in the selected region, to indicate a DNS server in the selected target DNS server group to resolve the target domain name.

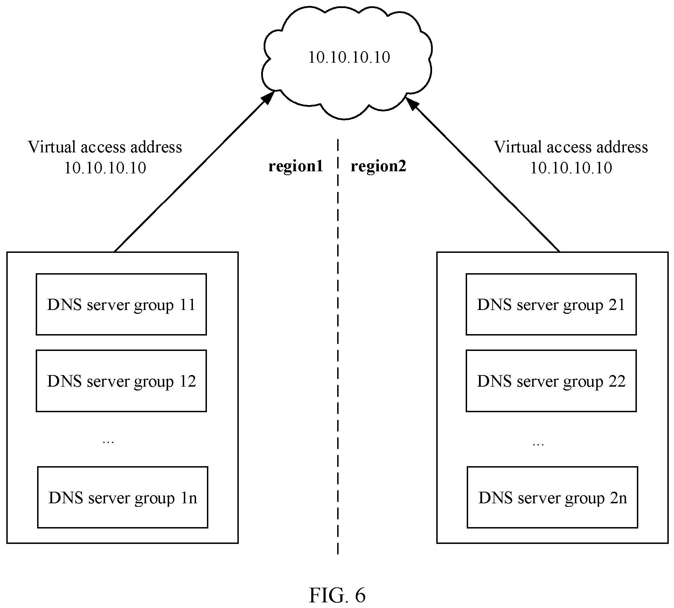

In an example, with reference to FIG. 6, a plurality of DNS servers (namely, a DNS server 11 to a DNS server 1n, and a DNS server 21 to a DNS server 2n) are configured to resolve domain names in the target DNS zone. When the domain name resolution request carries the domain name in the DNS zone, DNS servers in region1 and region2 all can provide a domain name resolution service. Based on this, region1 and region2 advertise a same virtual access address.

The virtual access address may be an internal IP address, for example, 10.10.10.10. During actual application, a public IP address may alternatively be used as the virtual access address. This is not limited in embodiments of this application.

It should be noted that because the plurality of DNS servers are configured to resolve the domain names in the target DNS zone, DNS server groups deployed in each region correspond to the same domain name suffix. However, because a quantity of DNS servers in each region may vary, a quantity of DNS server groups obtained after grouping is also different. Therefore, a mapping relationship between domain name suffixes and DNS server groups may be slightly different for each region.

For example, region1 includes 10 DNS server groups, and region2 includes 5 DNS server groups. If 10 domain name suffixes are determined based on the domain names in the target DNS zone, a target mapping relationship stored for region1 may be a mapping relationship between the 10 domain name suffixes and the 10 DNS server groups, and a target mapping relationship stored for region2 may be a mapping relationship between the 10 domain name suffixes and the 5 DNS server groups.

It can be learned that when the plurality of DNS servers are located in different regions, and the DNS servers located in the plurality of regions are configured to resolve the domain names in the target DNS zone, the same virtual access address may be set for the plurality of regions, and the same domain name suffix may be configured for the DNS server groups in the plurality of regions based on the domain names in the target name zone. In this way, when a domain name resolution request for any domain name that belongs to the DNS zone is forwarded to any region in the plurality of regions, a DNS server group in the region can resolve the domain name. In other words, when resolving the domain names in the target DNS zone, the DNS servers in the plurality of regions back up each other, to ensure high availability of the domain name resolution service in the target DNS zone.

In summary, in embodiments of this application, the cloud management platform obtains the maximum quantity of the plurality of DNS server groups based on the plurality of DNS servers included in the cloud infrastructure by properly grouping the plurality of DNS servers; generates the target mapping relationship between the domain name suffixes and the DNS server groups in combination with domain name suffixes of the domain names in the target DNS zone; and on a basis of the target mapping relationship, after receiving the domain name resolution request, may determine, based on the target mapping relationship and the domain name suffix of the target domain name carried in the domain name resolution request, the target DNS server group corresponding to the target domain name, so that a DNS server in the target DNS server group resolves the target domain name. It can be learned that in embodiments of this application, when the cloud management platform performs domain name resolution based on the target mapping relationship, domain names with a same domain name suffix can be resolved by DNS servers in a same DNS server group. In addition, because any two DNS server groups differ from each other by at least one DNS server, when a DNS server group is faulty, only a domain name suffix corresponding to the DNS server group is affected, and a resolution service of a domain name with another domain name suffix is not affected. In this way, a DNS server group is scheduled based on the target mapping relationship to provide the domain name resolution service for a domain name in the target name zone. This not only allows for fine-grained management of the domain name resolution service based on the DNS servers, but also reduces the blast radius of the domain name resolution service and improves the availability of the domain name resolution service.

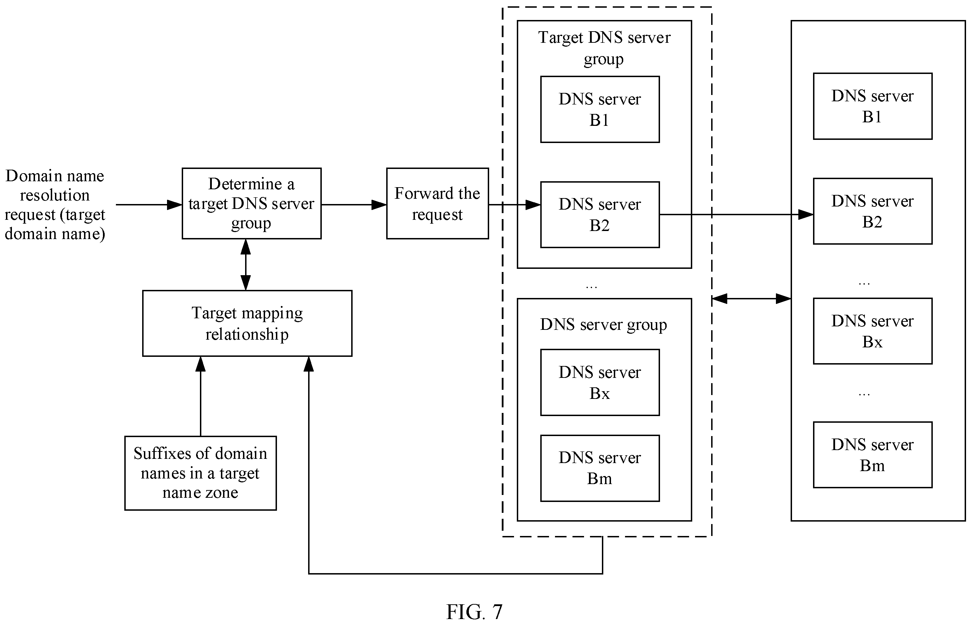

Based on the cloud computing technology-based domain name resolution method shown in the foregoing embodiments, for ease of understanding, the following uses an example in which a cloud management platform serves as an execution body to describe the cloud computing technology-based domain name resolution method with reference to FIG. 7.

With reference to FIG. 7, the cloud management platform is configured to manage a cloud infrastructure. The cloud infrastructure includes a DNS server B1 to a DNS server Bm. When the cloud management platform performs the cloud computing technology-based domain name resolution method provided in embodiments of this application, the cloud management platform first groups a plurality of DNS servers (namely, the DNS server B1 to the DNS server Bm) based on a total quantity of the plurality of DNS servers and a server group size, to obtain a plurality of DNS server groups; and then allocates domain name suffixes of domain names in a target DNS zone to the plurality of DNS server groups, so that each DNS server group corresponds to at least one domain name suffix, to obtain a target mapping relationship between the domain name suffixes and the DNS server groups, and stores the target mapping relationship.

Further, after receiving a domain name resolution request, the cloud management platform determines, based on the target mapping relationship and a target domain name carried in the domain name resolution request, a target DNS server group corresponding to the target domain name, and then selects a DNS server from the target DNS server group to resolve the target domain name.

It can be learned that for a plurality of DNS servers that can resolve domain names in a DNS zone, the cloud management platform first groups the plurality of DNS servers to obtain a plurality of DNS server groups, and allocates domain name suffixes of the domain names in the DNS zone to the plurality of DNS server groups, to generate a target mapping relationship between the domain name suffixes and the DNS server groups. In this way, when the plurality of DNS servers externally provide domain name resolution, a domain name resolution request may be forwarded by scheduling a DNS server group, to implement fine-grained management of domain name resolution in the DNS zone.

In addition, grouping a limited quantity of DNS servers into a plurality of DNS server groups can minimize a blast radius of a domain name resolution service. In this way, when a DNS server group is faulty, only a resolution service of a domain name with a domain name suffix corresponding to the DNS server group is affected, and a resolution service of a domain name with another domain name suffix is not affected. Meanwhile, because a plurality of DNS servers included in a DNS server group can all resolve a domain name with a corresponding domain name suffix, when a DNS server in a DNS server group is faulty, another DNS server in the DNS server group can still externally provide the domain name resolution service, to improve availability of the domain name resolution service.

Furthermore, when the domain names in the target DNS zone are resolved, in embodiments of this application, scheduling may be performed by DNS server group. When a quantity of DNS server groups is maximized, a minimum blast radius of the domain name resolution service can be ensured, to improve the availability of the domain name resolution service.

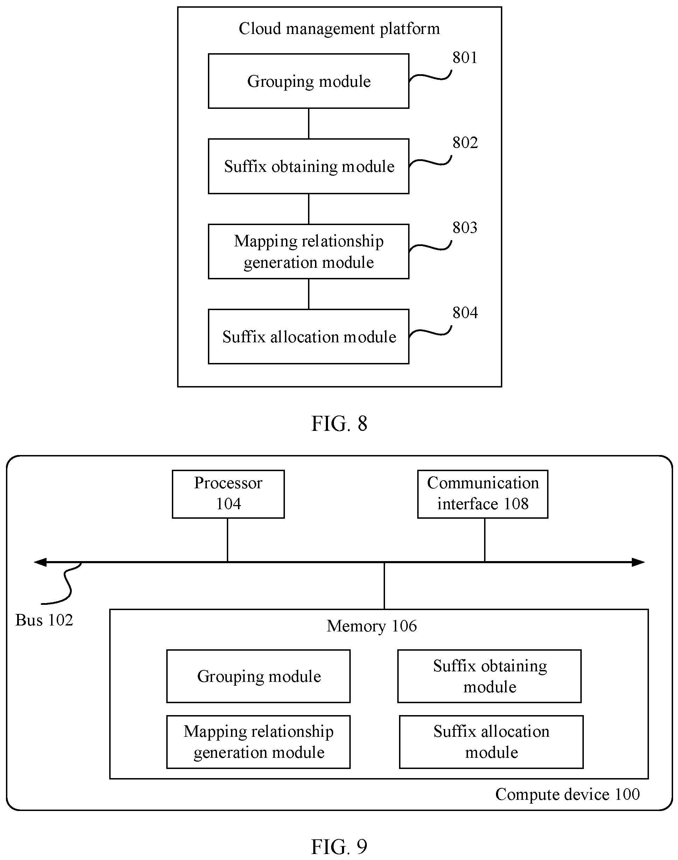

FIG. 8 is a diagram of a structure of a cloud management platform according to an embodiment of this application. With reference to FIG. 8, the cloud management platform includes a grouping module 801, a suffix obtaining module 802, a mapping relationship generation module 803, and a suffix allocation module 804.

The grouping module 801 is configured to group a plurality of DNS servers to obtain a plurality of DNS server groups. Each DNS server group includes at least one DNS server. Any two DNS server groups differ from each other by at least one DNS server. The plurality of DNS servers are configured to resolve domain names in a target name zone in a DNS namespace.

The suffix obtaining module 802 is configured to obtain a plurality of domain name suffixes. The plurality of domain name suffixes are suffixes of the domain names in the target name zone.

The mapping relationship generation module 803 is configured to generate a target mapping relationship based on the plurality of domain name suffixes and the plurality of DNS server groups. The target mapping relationship indicates a domain name suffix corresponding to each DNS server group among the plurality of DNS server groups.

The suffix allocation module 804 is configured to allocate the plurality of domain name suffixes to a corresponding DNS server group based on the target mapping relationship, so that a DNS server in the corresponding DNS server group resolves a domain name resolution request when receiving the domain name resolution request.

Optionally, the grouping module 801 includes:
a parameter obtaining unit, configured to obtain a total quantity of the plurality of DNS servers and a server group size, where the server group size indicates a quantity of DNS servers to be grouped into a same group; and
a grouping unit, configured to group the plurality of DNS servers through permutation and combination based on the total quantity of the plurality of DNS servers and the server group size, to obtain the plurality of DNS server groups.

Optionally, the cloud management platform is configured to manage a cloud infrastructure. The cloud infrastructure includes the plurality of DNS servers.

Optionally, if the plurality of DNS servers are located in a plurality of AZs in the cloud infrastructure, and the server group size is greater than or equal to a total quantity of the plurality of AZs, then each DNS server group includes at least one DNS server in each AZ.

Optionally, if the plurality of DNS servers are located in a plurality of regions in the cloud infrastructure, then the plurality of regions correspond to a same virtual access address, and DNS server groups in the plurality of regions correspond to a same domain name suffix.

Optionally, if the domain name resolution request carries a target domain name, and the target domain name belongs to the target name zone, then the corresponding DNS server group is determined from the plurality of DNS server groups based on the target domain name and the target mapping relationship.

Optionally, the corresponding DNS server is a DNS server group corresponding to a target domain name suffix. The target domain name suffix is a domain name suffix that is determined, using a longest suffix matching algorithm, from domain name suffixes corresponding to the plurality of DNS server groups and that matches the target domain name.

Optionally, the DNS server that resolves the domain name resolution request is a DNS server in the corresponding DNS server group.

Optionally, if DNS servers included in the corresponding DNS server group are located in at least one AZ, the DNS server that resolves the domain name resolution request is a DNS server in a first AZ in the corresponding DNS server group. The first AZ is an AZ in which an initiator of the domain name resolution request is located.

Optionally, if the DNS server in the first AZ cannot resolve the target domain name, the DNS server that resolves the domain name resolution request is a DNS server in another AZ other than the first AZ in the corresponding DNS server group.

In embodiments of this application, the cloud management platform obtains a maximum quantity of the plurality of DNS server groups based on the plurality of DNS servers included in the cloud infrastructure by properly grouping the plurality of DNS servers; and generates the target mapping relationship between the domain name suffixes and the DNS server groups in combination with domain name suffixes of domain names in a target DNS zone. In other words, for a limited quantity of DNS servers, the cloud management platform performs proper grouping and generates the target mapping relationship, so that when the plurality of DNS servers externally provide a domain name resolution service, the DNS servers can be scheduled in groups for domain name resolution based on the target mapping relationship. This not only allows for fine-grained management of the domain name resolution service, but also reduces a blast radius of the domain name resolution service and improves availability of the domain name resolution service.

Further, when the cloud management platform schedules the DNS servers for domain name resolution, the cloud management platform can enable, based on the target mapping relationship, domain names with a same domain name suffix to be resolved by DNS servers in a same DNS server group. In addition, because any two DNS server groups differ from each other by at least one DNS server, when a DNS server group is faulty, only a domain name suffix corresponding to the DNS server group is affected, and a resolution service of a domain name with another domain name suffix is not affected. In this way, a DNS server group is scheduled based on the target mapping relationship to provide the domain name resolution service for a domain name in the target name zone. This not only allows for fine-grained management of the domain name resolution service based on the DNS servers, but also reduces the blast radius of the domain name resolution service and improves the availability of the domain name resolution service.

It should be noted that when the cloud management platform provided in the foregoing embodiment constructs the target mapping relationship and resolves the domain names in the target DNS zone based on the target mapping relationship, division into the foregoing functional modules is merely used as an example for description. During actual application, the foregoing functions may be allocated to and completed by different functional modules as required, that is, an internal structure of the cloud management platform is divided into different functional modules to complete all or some of the foregoing functions. In addition, the cloud management platform provided in the foregoing embodiment and the foregoing embodiment of the cloud computing technology-based domain name resolution method shown in FIG. 2 belong to a same concept. For a specific implementation process, refer to the foregoing method embodiment. Details are not described herein again.

In the foregoing apparatus embodiment, the grouping module, the suffix obtaining module, the mapping relationship generation module, and the suffix allocation module may all be implemented by software or hardware. For example, the following uses the grouping module as an example to describe an implementation of the grouping module. Similarly, for implementations of the suffix obtaining module, the mapping relationship generation module, and the suffix allocation module, refer to the implementation of the grouping module.

A module is used as an example of a software functional unit, and the grouping module may include code run on a compute instance. The compute instance may include at least one of a physical host (a compute device), a virtual machine, or a container. Further, there may be one or more compute instances. For example, the grouping module may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the grouping module may include at least one compute device, for example, a server. Alternatively, the receiving module may be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of compute devices included in the grouping module may be distributed in a same region, or may be distributed in different regions. The plurality of compute devices included in the grouping module may be distributed in a same AZ, or may be distributed in different AZs. Similarly, the plurality of compute devices included in the grouping module may be distributed on a same VPC, or may be distributed on a plurality of VPCs. The plurality of compute devices may be any combination of compute devices such as a server, an ASIC, a PLD, a CPLD, an FPGA, and a GAL.

It should be noted that in another embodiment, the grouping module may be configured to perform any step in the cloud computing technology-based domain name resolution method, and the suffix obtaining module, the mapping relationship generation module, and the suffix allocation module each may also be configured to perform any step in the cloud computing technology-based domain name resolution method. In other words, steps implemented by the grouping module, the suffix obtaining module, the mapping relationship generation module, and the suffix allocation module may be specified as required. The grouping module, the suffix obtaining module, the mapping relationship generation module, and the suffix allocation module implement different steps in the cloud computing technology-based domain name resolution method, to implement all functions of the cloud management platform.

An embodiment of this application further provides a compute device 100. As shown in FIG. 9, the compute device 100 includes a bus 102, a processor 104, a memory 106, and a communication interface 108. The processor 104, the memory 106, and the communication interface 108 communicate with each other through the bus 102. The compute device 100 may be a server or a terminal device. It should be understood that a quantity of processors and a quantity of memories in the compute device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 9, but this does not mean that there is only one bus or only one type of bus. The bus 102 may include a path for transmitting information between the components (for example, the memory 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP). An integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid state drive (solid state drive, SSD), or any other medium that can be configured to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code. The processor 104 executes the executable program code to implement functions of the foregoing grouping module, suffix obtaining module, mapping relationship generation module, and suffix allocation module, to implement the cloud computing technology-based domain name resolution method shown in FIG. 2. In other words, the memory 106 stores instructions for performing the cloud computing technology-based domain name resolution method shown in FIG. 2.

The communication interface 108 implements communication between the compute device 100 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

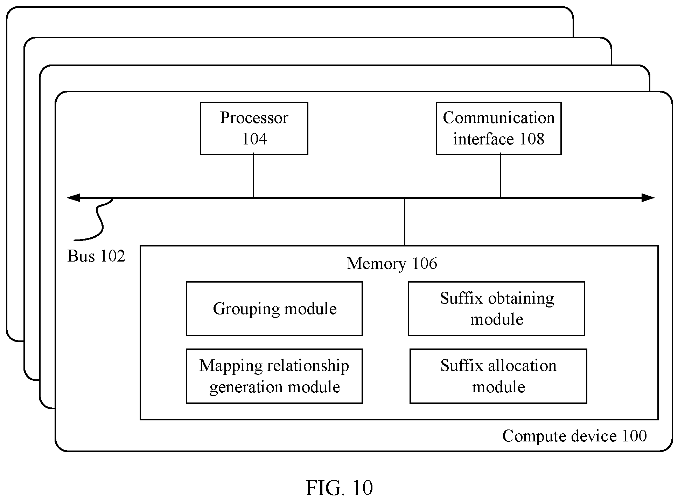

As shown in FIG. 10, the compute device cluster includes at least one compute device 100. Memories 106 in one or more compute devices 100 in the compute device cluster may store same instructions for performing the cloud computing technology-based domain name resolution method.

In some possible implementations, the memories 106 in the one or more compute devices 100 in the compute device cluster may alternatively respectively store some of instructions for performing the cloud computing technology-based domain name resolution method. In other words, a combination of the one or more compute devices 100 may jointly execute instructions for performing the cloud computing technology-based domain name resolution method.

Memories 106 in different compute devices 100 in the compute device cluster may store different instructions for performing some of the functions of the cloud management platform shown in FIG. 8. In other words, the instructions stored in the memories 106 in different compute devices 100 may implement functions of one or more of the grouping module, the suffix obtaining module, the mapping relationship generation module, and the suffix allocation module.

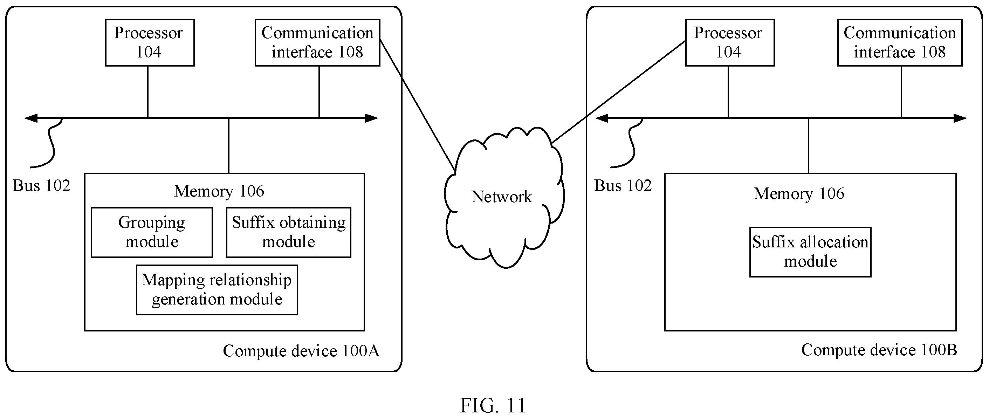

In some possible implementations, the one or more compute devices in the compute device cluster may be connected through a network. The network may be a wide area network, a local area network, or the like. FIG. 11 shows a possible implementation. As shown in FIG. 11, two compute devices 100A and 100B are connected through a network. Specifically, each compute device is connected to the network through a communication interface in the compute device. In this possible implementation, a memory 106 in the compute device 100A stores instructions for performing functions of the grouping module, the suffix obtaining module, and the suffix matching module. In addition, a memory 106 in the compute device 100B stores instructions for performing a function of the suffix allocation module.

The connection between compute device clusters shown in FIG. 11 may take into consideration that in the cloud computing technology-based domain name resolution method provided in this application, after generating a target mapping relationship, the cloud management platform further needs to analyze and match a plurality of domain name suffixes in combination with the target mapping relationship, to determine a DNS server group corresponding to each domain name suffix. This process may involve a large quantity of interaction processes and data configuration operations. Therefore, the function of the suffix allocation module related to domain name resolution is independently performed by the compute device 100B.

It should be understood that functions of the compute device 100A shown in FIG. 10 may alternatively be completed by a plurality of compute devices 100. Similarly, functions of the compute device 100B may alternatively be completed by a plurality of compute devices 100.

An embodiment of this application further provides another compute device cluster. For a connection relationship between compute devices in the compute device cluster, refer to the connection manner in the compute device cluster in FIG. 10 and FIG. 11. A difference lies in that memories 106 in one or more compute devices 100 in the compute device cluster may store same instructions for performing the cloud computing technology-based domain name resolution method.

In some possible implementations, the memories 106 in the one or more compute devices 100 in the compute device cluster may alternatively respectively store some of instructions for performing the domain name resolution method. In other words, a combination of the one or more compute devices 100 may jointly execute instructions for performing the cloud computing technology-based domain name resolution method.

It should be noted that memories 106 in different compute devices 100 in the compute device cluster may store different instructions for performing some of the functions of a cloud computing technology-based domain name resolution system. In other words, the instructions stored in the memories 106 in different compute devices 100 may implement functions of one or more apparatuses in the cloud management platform shown in FIG. 8.

In addition, FIG. 9 to FIG. 11 provided in embodiments of this application merely use examples in which the memory 106 stores the instructions for performing the cloud computing technology-based domain name resolution method shown in FIG. 2, and do not constitute a limitation on instructions that can be stored in the memory. In other words, the memory shown in FIG. 9 to FIG. 11 may alternatively include the grouping module, the suffix obtaining module, the mapping relationship generation module, and the suffix allocation module. This is not limited in embodiments of this application.

An embodiment of this application further provides a computer-readable storage medium. The computer-readable storage medium may be any usable medium that can be stored in a compute device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a compute device to perform steps of the cloud computing technology-based domain name resolution method in the foregoing embodiments.

An embodiment of this application further provides a computer program product including instructions. The computer program product may be software or a program product that includes instructions and that can be run on a compute device or that can be stored in any usable medium. When the computer program product is run on at least one compute device, the at least one compute device is enabled to perform steps of the cloud computing technology-based domain name resolution method in the foregoing embodiments.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. Persons skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions. For example, in embodiments of this application, related information about a plurality of domain name suffixes obtained based on domain names in a DNS zone is obtained under full authorization.

Finally, it should be noted that the foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

## Claims

1. A cloud computing technology-based domain name resolution method, applied to a cloud management platform, wherein the method comprises:
grouping a plurality of DNS servers to obtain a plurality of DNS server groups, wherein each DNS server group comprises at least one DNS server, any two DNS server groups differ from each other by at least one DNS server, and the plurality of DNS servers are configured to resolve domain names in a target name zone in a DNS namespace;
obtaining a plurality of domain name suffixes, wherein the plurality of domain name suffixes are suffixes of the domain names in the target name zone;
generating a target mapping relationship based on the plurality of domain name suffixes and the plurality of DNS server groups, wherein the target mapping relationship indicates a domain name suffix corresponding to each DNS server group among the plurality of DNS server groups; and
allocating the plurality of domain name suffixes to a corresponding DNS server group based on the target mapping relationship, so that a DNS server in the corresponding DNS server group resolves a domain name resolution request when receiving the domain name resolution request.

2. The method according to claim 1, wherein grouping the plurality of DNS servers to obtain the plurality of DNS server groups comprises:
obtaining a total quantity of the plurality of DNS servers and a server group size, wherein the server group size indicates a quantity of DNS servers to be grouped into a same group; and
grouping the plurality of DNS servers through permutation and combination based on the total quantity of the plurality of DNS servers and the server group size, to obtain the plurality of DNS server groups.

3. The method according to claim 1 or 2, wherein the cloud management platform is configured to manage a cloud infrastructure, and the cloud infrastructure comprises the plurality of DNS servers.

4. The method according to claim 3, wherein if the plurality of DNS servers are located in a plurality of availability zones AZs in the cloud infrastructure, and the server group size is greater than or equal to a total quantity of the plurality of AZs, then each DNS server group comprises at least one DNS server in each AZ.

5. The method according to claim 3 or 4, wherein if the plurality of DNS servers are located in a plurality of regions regions in the cloud infrastructure, then the plurality of regions correspond to a same virtual access address, and DNS server groups in the plurality of regions correspond to a same domain name suffix.

6. The method according to any one of claims 1 to 5, wherein if the domain name resolution request carries a target domain name, and the target domain name belongs to the target name zone, then the corresponding DNS server group is determined from the plurality of DNS server groups based on the target domain name and the target mapping relationship.

7. The method according to claim 6, wherein the corresponding DNS server is a DNS server group corresponding to a target domain name suffix, and the target domain name suffix is a domain name suffix that is determined, using a longest suffix matching algorithm, from domain name suffixes corresponding to the plurality of DNS server groups and that matches the target domain name.

8. The method according to claim 6 or 7, wherein the DNS server that resolves the domain name resolution request is a DNS server in the corresponding DNS server group.

9. The method according to claim 8, wherein if DNS servers comprised in the corresponding DNS server group are located in at least one availability zone AZ, the DNS server that resolves the domain name resolution request is a DNS server in a first AZ in the corresponding DNS server group, and the first AZ is an AZ in which an initiator of the domain name resolution request is located.

10. The method according to claim 9, wherein if the DNS server in the first AZ cannot resolve the target domain name, the DNS server that resolves the domain name resolution request is a DNS server in another AZ other than the first AZ in the corresponding DNS server group.

11. A cloud management platform, wherein the cloud management platform comprises:
a grouping module, configured to group a plurality of DNS servers to obtain a plurality of DNS server groups, wherein each DNS server group comprises at least one DNS server, any two DNS server groups differ from each other by at least one DNS server, and the plurality of DNS servers are configured to resolve domain names in a target name zone in a DNS namespace;
a suffix obtaining module, configured to obtain a plurality of domain name suffixes, wherein the plurality of domain name suffixes are suffixes of the domain names in the target name zone;
a mapping relationship generation module, configured to generate a target mapping relationship based on the plurality of domain name suffixes and the plurality of DNS server groups, wherein the target mapping relationship indicates a domain name suffix corresponding to each DNS server group among the plurality of DNS server groups; and
a suffix allocation module, configured to allocate the plurality of domain name suffixes to a corresponding DNS server group based on the target mapping relationship, so that a DNS server in the corresponding DNS server group resolves a domain name resolution request when receiving the domain name resolution request.

12. The cloud management platform according to claim 11, wherein the grouping module comprises:
a parameter obtaining unit, configured to obtain a total quantity of the plurality of DNS servers and a server group size, wherein the server group size indicates a quantity of DNS servers to be grouped into a same group; and
a grouping unit, configured to group the plurality of DNS servers through permutation and combination based on the total quantity of the plurality of DNS servers and the server group size, to obtain the plurality of DNS server groups.

13. The cloud management platform according to claim 11 or 12, wherein the cloud management platform is configured to manage a cloud infrastructure, and the cloud infrastructure comprises the plurality of DNS servers.

14. The cloud management platform according to claim 13, wherein if the plurality of DNS servers are located in a plurality of availability zones AZs in the cloud infrastructure, and the server group size is greater than or equal to a total quantity of the plurality of AZs, then each DNS server group comprises at least one DNS server in each AZ.

15. The cloud management platform according to claim 13 or 14, wherein if the plurality of DNS servers are located in a plurality of regions regions in the cloud infrastructure, then the plurality of regions correspond to a same virtual access address, and DNS server groups in the plurality of regions correspond to a same domain name suffix.

16. The cloud management platform according to any one of claims 11 to 15, wherein if the domain name resolution request carries a target domain name, and the target domain name belongs to the target name zone, then the corresponding DNS server group is determined from the plurality of DNS server groups based on the target domain name and the target mapping relationship.

17. The cloud management platform according to claim 16, wherein the corresponding DNS server is a DNS server group corresponding to a target domain name suffix, and the target domain name suffix is a domain name suffix that is determined, using a longest suffix matching algorithm, from domain name suffixes corresponding to the plurality of DNS server groups and that matches the target domain name.

18. The cloud management platform according to claim 16 or 17, wherein the DNS server that resolves the domain name resolution request is a DNS server in the corresponding DNS server group.

19. The cloud management platform according to claim 18, wherein if DNS servers comprised in the corresponding DNS server group are located in at least one availability zone AZ, the DNS server that resolves the domain name resolution request is a DNS server in a first AZ in the corresponding DNS server group, and the first AZ is an AZ in which an initiator of the domain name resolution request is located.

20. The cloud management platform according to claim 19, wherein if the DNS server in the first AZ cannot resolve the target domain name, the DNS server that resolves the domain name resolution request is a DNS server in another AZ other than the first AZ in the corresponding DNS server group.

21. A compute device cluster, wherein the compute device cluster comprises at least one compute device, and each compute device comprises a processor and a memory; and
the processor of the at least one compute device is configured to execute instructions stored in the memory of the at least one compute device, to enable the compute device cluster to perform steps of the cloud computing technology-based domain name resolution method according to any one of claims 1 to 10.

22. A computer-readable storage medium, comprising computer program instructions, wherein when the computer program instructions are executed by a compute device cluster, the compute device cluster performs steps of the cloud computing technology-based domain name resolution method according to any one of claims 1 to 10.

23. A computer program product comprising instructions, wherein when the instructions are run by a compute device cluster, the compute device cluster is enabled to perform steps of the cloud computing technology-based domain name resolution method according to any one of claims 1 to 10.
